# FASCICULE DE BREVET EUROPEEN

(11) **EP 0 856 140 B1**
(45) Date de publication et mention de la délivrance du brevet: **03.01.2001**
(21) Numéro de dépôt: 96934961.2
(22) Date de dépôt: 24.10.1996
(51) Int. Cl.: F42B 3/04, B60R 21/26

(54) **GENERATEUR PYROTECHNIQUE DE GAZ, A DEBIT ADAPTABLE, POUR COUSSINS DE PROTECTION**
GASGENERATOR MIT REGELBAREM DURCHFLUSS FÜR EINEM AIRBAG
PYROTECHNIC GAS GENERATOR WITH AN ADAPTABLE FLOW RATE FOR AIR BAGS

(30) Priorité: 30.10.1995 FR 9512767
(43) Date de publication de la demande: 05.08.1998
(73) Titulaire: S.N.C. LIVBAG, 91710 Vert Le Petit (FR)
(72) Inventeur: PEROTTO, Christian, F-91610 Ballancourt (FR); BOURCART, Denis, F-93520 Les Lilas (FR)
(74) Mandataire: Pech, Bernard
(86) Numéro de dépôt international: FR9601659
(87) Numéro de publication internationale: WO9716695

(56) Documents cités:
- EP-A- 0 382 552
- EP-A- 0 609 981
- EP-A- 0 738 631
- WO-A-92/22441
- DE-A- 2 107 859
- DE-A- 4 239 167
- DE-C- 372 560
- DE-C- 2 301 881
- FR-A- 2 233 202
- FR-A- 2 593 907
- US-A- 3 407 732
- US-A- 3 773 352
- US-A- 3 773 353
- US-A- 3 904 221
- US-A- 3 972 545
- US-A- 5 301 978

## Description

L'invention se rapporte au domaine de la sécurité automobile et concerne plus particulièrement des générateurs pyrotechniques de gaz pour gonfler des coussins de protection.

Les générateurs de gaz actuels comme décrits dans de nombreux brevets présentent généralement une chambre de combustion contenant un propergol générateur de gaz qui peut-être dans le cas de générateurs "hybrides" associée à une réserve de gaz comprimé. Ces générateurs sont généralement initiés au moyen d'un initiateur électrique. A titre d'exemple, la demande de brevet PCT WO 92/22441 et le brevet US 5 301 978 correspondent à ces générateurs "hybrides".

Récemment de nouveaux générateurs, dits "progressifs", sont apparus et permettent, au moyen de deux initiateurs électriques placés dans deux chambres de combustion séparées, d'adapter le débit du générateur en fonction de différents paramètres comme la température, la nature et l'intensité du choc, la taille et la position du passager. Le déclenchement des deux initiateurs est généralement décalé dans le temps de quelques millisecondes. Ce décalage se fait électroniquement et de façon programmée dans le temps de façon à optimiser le débit du générateur et donc le niveau de pression obtenu dans le sac. Le brevet US 3 972 545, qui forme la base pour le préambule de la revendication 1, décrit un générateur de gaz pour "passager". Ce générateur comprend deux chambres à chargement pyrotechnique, séparées par une cloison consumable, comportant chacune un initiateur. Selon l'intensité du choc, le déclenchement des deux initiateurs reliés à une unique alimentation électrique peut se produire à des instants différents. Lorsqu'un signal électrique de faible voltage est émis, seule une chambre est allumée à l'aide d'un inflammateur électrique, la seconde étant allumée lorsque la cloison séparant les deux chambres est consumée. En revanche, lorsqu'un signal électrique de haut voltage est émis, les deux inflammateurs électriques sont activés, ce qui entraîne un allumage simultané des deux chambres. De plus, il en découle que le volume de gaz libéré dans les deux cas est identique. Ce générateur est donc bien progressif et permet, en outre, un allumage simultané des deux chargements pyrotechniques.

Un autre type de générateur progressif, plus spécialement conçu pour protéger un passager, est divulgué dans la demande de brevet EP-A-382 552. Ce générateur est constitué par une pièce cylindrique monobloc divisée en deux parties par une cloison interne et présente deux chambres de combustion contenant chacune un chargement pyrotechnique et un initiateur, chaque initiateur étant relié à une alimentation électrique distincte, ce qui augmente les coûts et les encombrements. En fonctionnement, les deux chambres sont allumées, en toutes circonstances, de façon décalée dans le temps afin d'optimiser le débit de gaz et donc le niveau de pression obtenu dans le coussin de protection.

Ces systèmes présentent de nombreux inconvénients comme leur encombrement et leur coût, ce qui limite considérablement leur application et en particulier pour les systèmes "conducteur". Les générateurs aujourd'hui décrits dans les brevets et dans les publications concernent essentiellement des générateurs de gaz pour "passager" qui sont moins limités en taille et en poids que les générateurs "conducteur". La demande de brevet EP 0 609 981 définit un générateur de gaz pour "conducteur" qui permet de faire varier la durée de combustion du chargement pyrotechnique par l'intermédiaire de deux initiateurs pouvant être mis à feu successivement ou simultanément. Mais, l'utilisation de deux initiateurs indépendants et séparés nécessite des alimentations électriques elles aussi séparées qui augmentent les coûts et les encombrements.

L'ensemble de ces problèmes fait que de telles technologies sont très difficilement transposables pour des générateurs à faible coût et à faible encombrement et donc en particulier pour des générateurs "conducteur".

L'homme de métier ne dispose donc pas de solutions qui permettent d'obtenir les mêmes fonctions en utilisant des moyens plus adaptés à des contraintes de coût et d'encombrement.

L'invention a précisément pour objet de proposer un tel générateur.

L'invention concerne donc :
un générateur pyrotechnique progressif de gaz destiné à la sécurité automobile et comportant notamment un corps creux comprenant un couvercle et une paroi latérale présentant à son extrémité opposée audit couvercle une ouverture dans laquelle est fixée une bague de fermeture, le dit corps creux contenant notamment deux chargements pyrotechniques générateurs de gaz distincts et étant pourvu d'orifices mettant en communication l'intérieur et l'extérieur du dit corps creux,
caractérisé en ce que,
i) le dit corps creux comporte une cloison étanche aux gaz permettant de constituer à l'intérieur du dit corps creux deux chambres de combustion indépendantes contenant chacune l'un des deux chargements pyrotechniques,
ii) la dit bague de fermeture supporte un dispositif électronique d'allumage permettant soit d'allumer uniquement un seul des deux chargements pyrotechniques, soit d'allumer à des instants différents chacun des deux chargements pyrotechniques.

Il est à noter que dans le cadre de la présente invention les deux chargements pyrotechniques peuvent être identiques ou différents.

Préférentiellement, le dit corps creux est un corps de révolution.

Préférentiellement encore, le dispositif d'allumage est constitué par un initiateur électronique à double tête, chacune étant assimilée à un allumeur, et l'initiateur ne comporte qu'une seule alimentation électrique.

Selon une première variante préférée, chacune de ces deux têtes présente une résistance distincte et différente.

Selon une seconde variante préférée, chacune de ses deux têtes présente une résistance distincte incorporée à un pont de commutation comprenant quatre interrupteurs pouvant basculer par couple combinés à un circuit d'aiguillage réalisé par un circuit à diodes. Avantageusement, ces interrupteurs sont constitués par des transistors pouvant être inclus dans un module unique.

Dans ces réalisations, la dite cloison enserre de manière étanche et maintient l'initiateur.

Préférentiellement, le dit générateur comporte autour des dits orifices une chambre annulaire de stabilisation et de diffusion des gaz.

L'invention est exposée plus en détail à l'aide des figures 1 à 9.

La figure **1** est une vue de face, coupée selon AA, d'un générateur selon la première variante préférée de l'invention.

La figure **2** est une vue partielle de dessous, coupée selon BB, du générateur représenté à la figure 1.

La figure **3** est une vue de côté, coupée selon CC, du générateur représenté à la figure 1.

La figure **4** est une vue partielle de face, coupée selon AA, d'un générateur selon la seconde variante préférée de l'invention.

La figure **5**, est une vue partielle de dessus, coupée selon BB, du générateur représenté à la figure 4.

La figure **6** une vue de la face inférieure de la platine d'allumage du générateur représenté à la figure 4.

La figure **7** est une vue de la face supérieure de la platine d'allumage du générateur représenté à la figure 4.

La figure **8** est une vue de face, coupée selon CC, de la platine d'allumage représentée aux figures 6 et 7.

La figure **9** est un schéma électrique du dispositif électrique de mise à feu des deux têtes du générateur représenté à la figure 4.

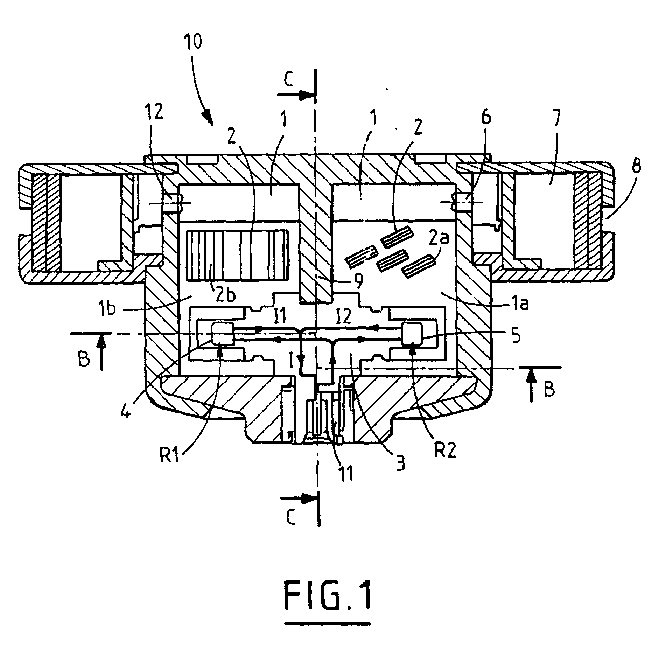

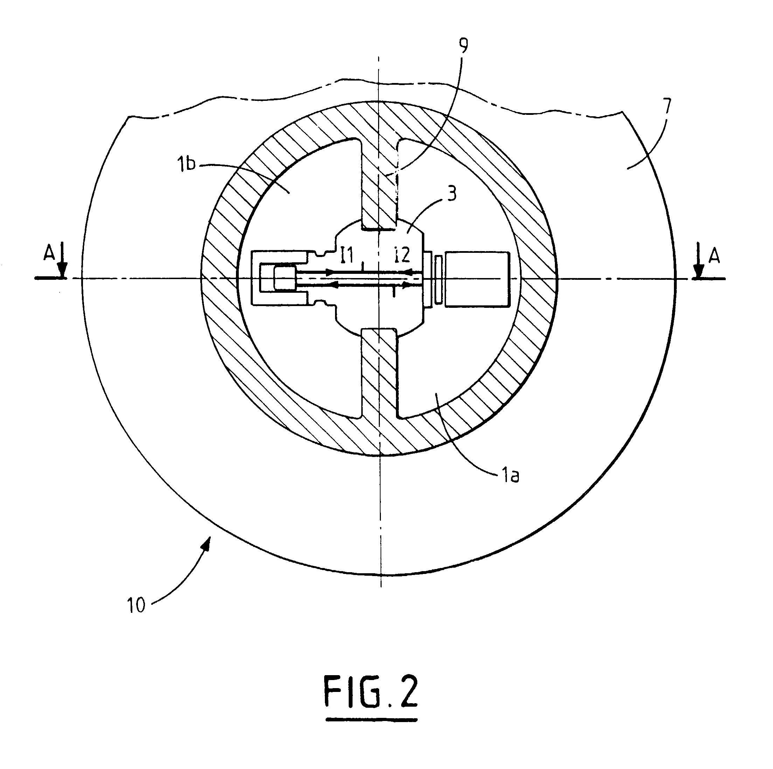

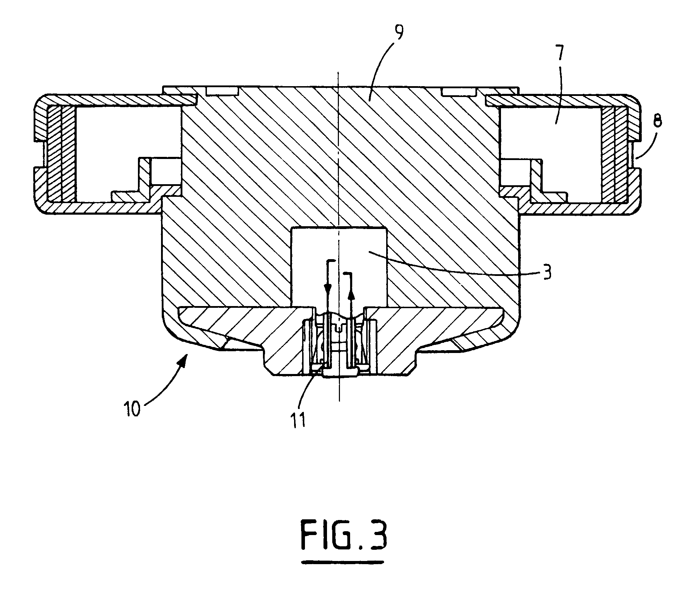

Un exemple de générateur 10 selon la première variante préférée est présenté aux figures 1 à 3. Ce générateur 10 de type "conducteur" possède un encombrement géométrique interchangeable avec ceux aujourd'hui présents sur le marché. Sa masse totale est de l'ordre de 500g et compatible avec l'ensemble des systèmes existants.

Ce générateur 10 "conducteur" est constitué de deux chambres de combustion indépendantes 1 et plus précisément 1a et 1b séparées par une cloison 9 et contenant un propergol solide 2 se présentant sous forme de pastilles 2a ou sous forme monolithique 2b, à base de propergol composite ou de propergol à double base ou encore de propergol à base d'azoture de sodium. Les masses de propergol contenues dans chaque chambre sont variables en fonction des effets désirés et peuvent par exemple correspondre au gonflement d'un sac de volume variant de 60 à 80 litres. Les deux chambres de combustion sont initiées par l'initiateur à double tête 3 par un même courant. Chaque tête 4 et 5 du double initiateur possédant une résistance différente permet donc d'obtenir un décalage pouvant atteindre par exemple 10 ms entre l'initiation des deux chambres. Cette temporisation peut aussi être réglée par le niveau d'intensité délivré par la centrale électronique. L'exemple suivant permettra de mieux comprendre le principe de fonctionnement de ce type d'initiateur :

### chambre 1b :

- résistance = R₁
- courant de non feu = 200 mA
- courant de tout feu = 800 mA/2 ms

### chambre 1a :

- résistance = R₂
- courant de non feu = 1000 mA
- courant de tout feu = 1600 mA/2 ms

Les différents fonctionnements accessibles sont donc les suivants en fonction de l'intensité de mise à feu délivrée par le boîtier électronique, les deux têtes étant montées en parallèle :
- pour I > x mA, x correspondant à une valeur suffisante (de l'ordre de 3000 mA) pour initier en parallèle les résistances R₁ et R₂ : initiation simultanée des têtes 4 et 5 (t<2ms),
- pour 200 mA < I < y mA, y correspondant à une valeur suffisante (de l'ordre de 1000 mA) pour initier uniquement la résistance R₁ : initiation de la tête 4 seule (t<2ms),
- pour I compris entre x et y : initiation simultanée (t<2ms) de la tête 4 et initiation avec un retard prédéfini de la tête 5.

Il est alors possible de facilement pouvoir, soit initier simultanément les deux chambres pour obtenir un débit maximum permettant de gonfler complètement un sac de 80 litres par exemple, soit de déclencher uniquement une seule chambre pour obtenir un débit moindre et de ne gonfler le sac que partiellement, par exemple à 60 litres. Suivant les applications et les besoins, il est possible après étalonnage et si nécessaire de faire varier de façon continue la temporisation et donc le débit du générateur en fonction de l'intensité délivrée par la centrale électronique.

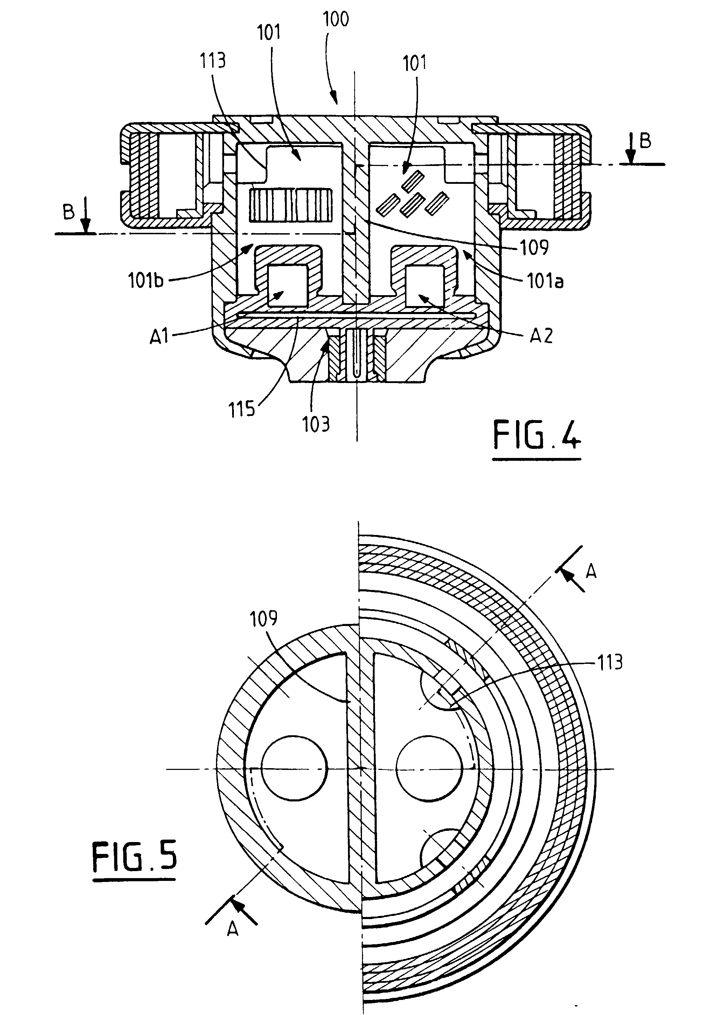

Un exemple de générateur selon la seconde variante préférée est présenté aux figures 4 à 9.

Le générateur 100 "conducteur" est constitué de deux chambres de combustion 101 et plus précisément 101a et 101b séparées par une cloison 109, qui enserre de manière étanche et maintient l'initiateur 103, et contenant un chargement pyrotechnique équivalent à celui décrit précédemment. Une enveloppe cylindrique isolante 113 est disposée à l'intérieur du corps creux du générateur pyrotechnique 100, et son extrémité libre est pincée entre la surface intérieure du corps creux et la bague de fermeture. Les têtes 4 et 5 de l'initiateur sont incorporées à un pont de commutation comportant quatre interrupteurs Q₁ à Q₄ pouvant basculer par couple et combinés à un circuit d'aiguillage réalisé par un circuit à diodes D₁ et D₂.

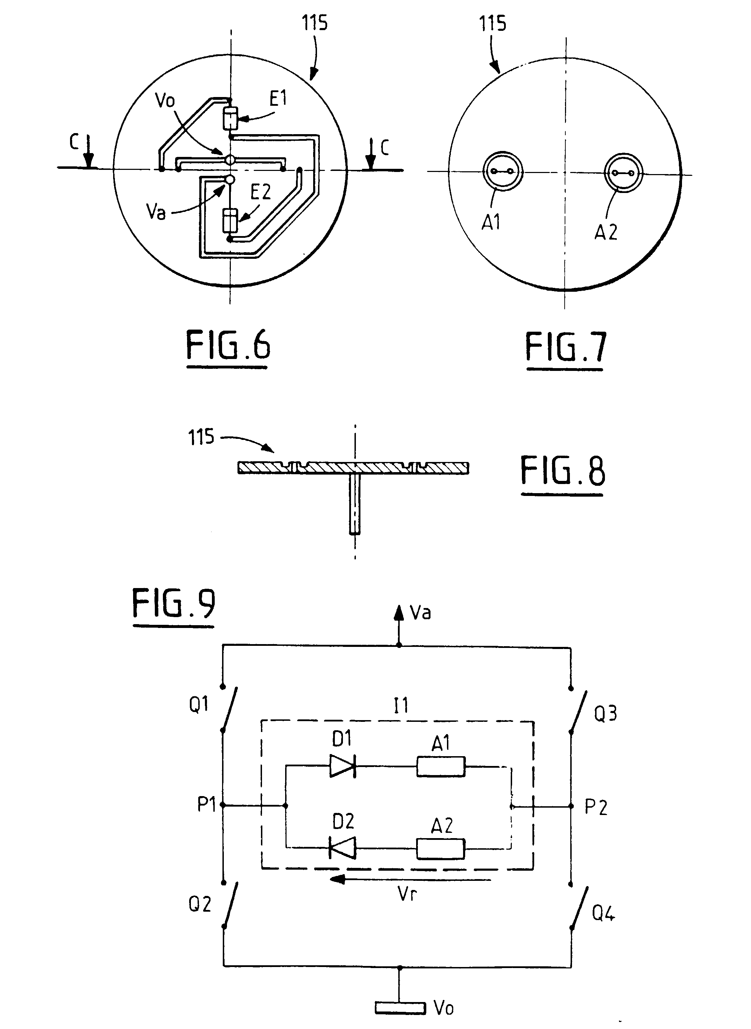

La figure 9, tout particulièrement, permet de décrie le fonctionnement de la platine d'allumage 115.

Chaque paire d'interrupteurs Q₁,Q₂,et Q₃,Q₄ est montée entre une tension de mise à feu Va et la masse électrique du circuit Vo. Les points milieu P₁ et P₂ de chaque branche sont connectés vers l'ensemble d'initiation I₁ composé de deux têtes 4 et 5, comportant respectivement les résistances A₁ et A₂, connectées entre elles et comportant deux diodes D₁ et D₂ permettant d'isoler une des têtes 4 ou 5 suivant la polarité de la tension Vr de mise à feu, les interrupteurs Q₁ à Q₄ étant successivement fermés ou ouverts suivant la table suivante :
- si Q₁ et Q₄ sont fermés, et Q₂, Q₃ ouverts, alors la tension Vr est positive, la diode D₁ passante et la résistance A₁ soumise au courant électrique, entraînant par suite la mise à feu de la tête 4. La diode D₂ est bloquée et la résistance A₂ n'est pas soumise au courant électrique,
- si Q₂ et Q₃ sont fermés, et Q₁,Q₄ ouverts, alors la tension Vr est négative, la diode D₂ passante et la résistance A₂ soumise au courant électrique, entraînant par suite la mise à feu de la tête 5. La diode D₁ est bloquée et la résistance A₁ n'est pas soumise au courant électrique.

comme présenté sur la figure 6, les sous-ensembles E₁ et E₂ correspondent à la combinaison des interrupteurs Q₁ à Q₄ et des diodes D₁ et D₂. Le sous-ensemble E₁ comprend les interrupteurs Q₁,Q₄ et la diode D₁ et le sous-ensemble E₂ comprend les interrupteurs Q₂, Q₃ et la diode D₂. Avantageusement, les interrupteurs Q₁ à Q₄ seront constitués par des transistors susceptibles d'être transposés dans un module unique.

Il est alors possible de facilement pouvoir, soit initier successivement les deux chambres et par conséquence de gonfler le sac de façon maximale après temporisation, soit initier, au choix, uniquement une chambre, et donc obtenir un remplissage du sac moindre.

Après initiation, le générateur 10 ou 100 fonctionne sur le même principe que les générateurs classiques, c'est-à-dire, claquage de l'opercule 6, passage des gaz dans une chambre de stabilisation comportant un diffuseur 7 et une sortie des gaz par des trous 8 répartis symétriquement.

On a donc mis au point deux générateurs à deux chambres permettant d'obtenir les mêmes effets que ceux décrits précédemment. Ces deux chambres sont initiées de façons indépendantes au moyen d'un seul initiateur possédant deux têtes. Ce double initiateur est alimenté normalement au moyen d'un seul circuit électrique venant d'un boîtier électronique de commande.

Dans le cadre de la première variante préférée, le retard entre l'initiation des deux têtes est alors assuré par leur configuration différente. Un moyen simple de faire varier le temps de réaction des têtes de l'initiateur est d'employer par exemple des filaments explosibles de résistances électriques différentes. Donc, pour un niveau d'intensité fourni par le boîtier électronique il sera possible de déclencher simultanément ou avec un décalage programmé dans le temps les deux têtes de l'initiateur.

Dans le cadre de la seconde variante préférée, l'initiation de l'une des deux têtes au choix , ou le retard entre l'initiation des deux têtes ayant chacune une résistance distincte, est alors assuré par l'incorporation de celles-ci à un pont de commutation comprenant quatre interrupteurs pouvant basculer par couple combinés à un circuit d'aiguillage réalisé par un circuit à diodes. Donc, selon le sens du courant électrique fourni par le boîtier électronique, il sera alors possible de déclencher soit l'une des deux têtes de l'initiateur, soit les deux après temporisation.

Ces générateurs présentent donc l'avantage de ne nécessiter qu'une arrivée électrique et peuvent par conséquent pratiquement être incorporés dans des configurations proches de celles classiquement employées aujourd'hui. Le fait de remplacer deux initiateurs comportant deux circuits indépendants permet aussi de diminuer considérablement le coût de ces systèmes.

Ce type de technologie est particulièrement intéressant pour des applications où l'encombrement et le poids du générateur sont des paramètres essentiels, ce qui est généralement le cas pour les systèmes "conducteur".

Ces principes peuvent évidemment être avantageusement appliqués aux systèmes "passager" et aux nouveaux générateurs pour protections latérales.

Ces générateurs pyrotechniques sont particulièrement adaptés à cette technologie où l'on recherche à priori des produits très simples et peu coûteux mais peuvent être aussi employés pour des générateurs hybrides ou tout autre type de générateurs comme ceux à gaz liquéfiés ou à gaz réactifs.

De plus, la seconde variante préférée de l'invention présente certains avantages par rapport à la première :
- elle pallie un inconvénient consistant dans le développement et la fabrication de deux types d'allumeurs différents,
- elle permet de diagnostiquer un éventuel défaut de connexion des allumeurs,
- elle permet d'isoler les allumeurs en cas de fuite,
- pour les allumeurs en support silicium par exemple les allumeurs de type "SCB", l'intégration des diodes peut être faite sur le même substrat que l'élément initiateur pyrotechnique. Cette approche permet une optimisation du coût de la fabrication de l'initiateur.

## Revendications

1. Générateur pyrotechnique progressif de gaz (10,100) destiné à la sécurité automobile et comportant notamment un corps creux comprenant un couvercle et une paroi latérale présentant à son extrémité opposée au dit couvercle une ouverture dans laquelle est fixée une bague de fermeture, ledit corps creux contenant notamment deux chargements pyrotechniques (2a,2b) générateurs de gaz distincts et étant pourvu d'orifices (12) mettant en communication l'intérieur et l'extérieur du dit corps creux, caractérisé en ce que,
i) le dit corps creux comporte une cloison (9,109) étanche aux gaz permettant de constituer à l'intérieur du dit corps creux deux chambres de combustion indépendantes (1a,1b,101a,101b) contenant chacune l'un des deux chargements pyrotechniques (2a,2b),
ii) la dite bague de fermeture supporte un dispositif électrique d'allumage (3,103) permettant soit d'allumer uniquement un seul des deux chargements pyrotechniques (2a,2b), soit d'allumer à des instants différents chacun des deux chargements pyrotechniques (2a,2b).

2. Générateur selon la revendication 1, caractérisé en ce que le dit corps creux est un corps de révolution.

3. Générateur selon la revendication 1, caractérisé en ce que le dispositif d'allumage (3,103) est constitué par un initiateur électrique à double tête (4,5).

4. Générateur selon la revendication 3, caractérisé en ce que l'initiateur (3,103) ne comporte qu'une seule alimentation électrique (11).

5. Générateur selon la revendication 4, caractérisé en ce que chacune des deux têtes (4,5) présente une résistance différente (R₁,R₂).

6. Générateur selon la revendication 4, caractérisé en ce que chacune des deux têtes (4,5) présente une résistance distincte (A₁,A₂) incorporée à un pont de commutation comprenant quatre interrupteurs (Q₁ à Q₄) pouvant basculer par couple combinés à un circuit d'aiguillage réalisé par un circuit à diodes (D₁,D₂).

7. Générateur selon la revendication 6, caractérisé en ce que les quatre interrupteurs Q₁ à Q₄ sont constitués par des transistors.

8. Générateur selon la revendication 7, caractérisé en ce que les dits transistors sont incorporés dans un module unique.

9. Générateur selon la revendication 1, caractérisé en ce que la cloison (9,109) enserre de manière étanche l'initiateur (3,103).

10. Générateur selon la revendication 1, caractérisé en ce qu'il comporte autour des orifices (12) une chambre (7) de stabilisation et de diffusion de gaz.

## Patentansprüche

1. Progressiv wirkender, pyrotechnischer Gasgenerator (10, 100) für die Kraftfahrzeugsicherheit, der insbesondere einen Hohlkörper mit einem Deckel und einer Seitenwand aufweist, die an ihrem dem Deckel entgegengesetzten Ende eine Öffnung aufweist, in der ein Schließring befestigt ist, wobei der Hohlkörper insbesondere zwei getrennte, gaserzeugende pyrotechnische Ladungen (2a, 2b) enthält und mit Öffnungen (12) versehen ist, die die Innenseite und die Außenseite des Hohlkörpers miteinander in Verbindung setzen, dadurch gekennzeichnet, daß
i) der Hohlkörper eine gasdichte Trennwand (9, 109) aufweist, die es ermöglicht, innerhalb des Hohlkörpers zwei unabhängige Brennkammern (1a, 1b, 101a, 101b) zu bilden, die je eine der beiden pyrotechnischen Ladungen (2a, 2b) enthalten,
ii) der Schließring eine elektrische Zündvorrichtung (3, 103) trägt, die es ermöglicht, entweder nur eine der beiden pyrotechnischen Ladungen (2a, 2b) oder zu unterschiedlichen Zeitpunkten beide pyrotechnischen Ladungen (2a, 2b) zu zünden.

2. Generator nach Anspruch 1, dadurch gekennzeichnet, daß der Hohlkörper ein drehsymmetrischer Körper ist.

3. Generator nach Anspruch 1, dadurch gekennzeichnet, daß die Zündvorrichtung (3, 103) aus einem elektrischen Starter mit doppeltem Kopf (4, 5) besteht.

4. Generator nach Anspruch 3, dadurch gekennzeichnet, daß der Starter (3, 103) nur eine Stromversorgung (11) aufweist.

5. Generator nach Anspruch 4, dadurch gekennzeichnet, daß jeder der beiden Köpfe (4, 5) einen eigenen Widerstand (R₁, R₂) aufweist.

6. Generator nach Anspruch 4, dadurch gekennzeichnet, daß jeder der beiden Köpfe (4, 5) einen eigenen Widerstand (A₁, A₂) aufweist, der in eine Schaltbrücke eingebaut ist, die vier Schalter (Q₁ bis Q₄) enthält, welche paarweise kippen können und mit einer Verzweigungsschaltung kombiniert sind, die aus einer Diodenschaltung (D₁, D₂) besteht.

7. Generator nach Anspruch 6, dadurch gekennzeichnet, daß die vier Schalter Q₁ bis Q₄ aus Transistoren bestehen.

8. Generator nach Anspruch 7, dadurch gekennzeichnet, daß die Transistoren in einen einzigen Modul eingebaut sind.

9. Generator nach Anspruch 1, dadurch gekennzeichnet, daß die Trennwand (9, 109) den Starter (3, 103) dicht umschließt.

10. Generator nach Anspruch 1, dadurch gekennzeichnet, daß er um die Öffnungen (12) herum eine Kammer (7) zur Stabilisierung und Diffusion von Gas aufweist.

## Claims

1. Progressive pyrotechnic gas generator (10, 100) intended for motor-vehicle safety and comprising, in particular, a hollow body which includes a cover and a side wall having at its opposite end from the said cover an opening into which a closure ring is fitted, the said hollow body especially containing two separate gas-generating pyrotechnic charges (2a, 2b) and being provided with orifices (12) which bring the inside and the outside of the said hollow body into communication, characterized in that,
i) the said hollow body has a gastight partition (9, 109) allowing the inside of the said hollow body to consist of two independent combustion chambers (1a, 1b, 101a, 101b) each containing one of the two pyrotechnic charges (2a, 2b),
ii)the said closure ring supports an electrical ignition device (3, 103) allowing either only one of the two pyrotechnic charges (2a, 2b) to be ignited or allowing each of the two pyrotechnic charges (2a, 2b) to be ignited at different times.

2. Generator according to Claim 1, characterized in that the said hollow body is a body of revolution.

3. Generator according to Claim 1, characterized in that the ignition device (3, 103) consists of an electrical initiator having two heads (4, 5).

4. Generator according to Claim 3, characterized in that the initiator (3, 103) has only a single electrical supply (11).

5. Generator according to Claim 4, characterized in that each of the two heads (4, 5) has a different resistor (R₁, R₂).

6. Generator according to Claim 4, characterized in that each of the two heads (4, 5) has a separate resistor (A₁, A₂) incorporated at a switching bridge comprising four switches (Q₁ to Q₄) able to switch in pairs, the said switches being combined with a routing circuit formed by a circuit comprising diodes (D₁, D₂).

7. Generator according to Claim 6, characterized in that the four switches Q₁ to Q₄ consist of transistors.

8. Generator according to Claim 7, characterized in that the said transistors are incorporated into a single module.

9. Generator according to Claim 1, characterized in that the partition (9, 109) seals against the initiator (3, 103).

10. Generator according to Claim 1, characterized in that it includes, around the orifices (12), a gas stabilization and diffusion chamber (7).
